(19) Europäisches Patentamt
European Patent Office
Office européen des brevets

(11) EP 2 611 877 B1

(12) # EUROPÄISCHE PATENTSCHRIFT

(45) Veröffentlichungstag und Bekanntmachung des Hinweises auf die Patenterteilung:
**20.06.2018 Patentblatt 2018/25**

(21) Anmeldenummer: **11749815.4**

(22) Anmeldetag: **25.08.2011**

(51) Int Cl.:
***C09J 7/38*** *(2018.01)* ***C09J 5/00*** *(2006.01)*
***C09J 133/08*** *(2006.01)* ***G09F 3/10*** *(2006.01)*

(86) Internationale Anmeldenummer:
**PCT/EP2011/064594**

(87) Internationale Veröffentlichungsnummer:
**WO 2012/028520 (08.03.2012 Gazette 2012/10)**

(54) **VERFAHREN ZUM VERKLEBEN UND ABLÖSEN VON ABWASCHBAREN ETIKETTEN**
METHOD FOR BONDING AND DETACHING WASH-OFF LABELS
PROCÉDÉ POUR COLLER ET DÉCOLLER DES ÉTIQUETTES LAVABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2010 EP 10174653**

(43) Veröffentlichungstag der Anmeldung:
**10.07.2013 Patentblatt 2013/28**

(73) Patentinhaber: **BASF SE**
**67056 Ludwigshafen am Rhein (DE)**

(72) Erfinder:
- **CIMPEANU, Carmen-Elena**
  **67059 Ludwigshafen (DE)**
- **BEYERS, Cornelis Petrus**
  **7600 Stellenbosch (ZA)**
- **DRAGON, Andree**
  **67346 Speyer (DE)**
- **TORRES LLOSA, Jose Maria**
  **67071 Ludwigshafen (DE)**
- **FLAMING, Erika**
  **67227 Frankenthal (DE)**
- **WERNZ, Uwe**
  **69121 Heidelberg (DE)**

(74) Vertreter: **BASF IP Association**
**BASF SE**
**G-FLP-C006**
**67056 Ludwigshafen (DE)**

(56) Entgegenhaltungen:
**WO-A2-2009/003737 DE-A1- 10 110 837**
**DE-A1- 10 310 889**

- **RUDOF RIESEN ET AL: "Die Glasübergangtemperatur gemessen mit verschiedenen TA-Techniken, Teil 2: Ermittlung der Glasübergangstemperaturen", INTERNET CITATION, 1. Februar 2003 (2003-02-01), Seiten 1-20, XP002594785, Gefunden im Internet: URL:http://de.mt.com/global/de/home/suppor tive_content/usercom/TA_UserCom 18.z2vUzxjPy0vKAxrVCMLHBfbHCl45nZa0nG--. Me diaFileComponent.html/tause rc18d.pdf [gefunden am 2010-08-02]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft Verfahren zum Verkleben und Ablösen von abwaschbaren Etiketten, wobei auf dem Etikett oder auf einem Substrat ein strahlungsvernetzbarer Haftklebstoff aufgetragen wird, Etikett und Substrat miteinander verklebt werden, der Haftklebstoff vor dem Verkleben durch Bestrahlung vernetzt wird und der Haftklebstoff vor der Vernetzung eine Glasübergangstemperatur von kleiner oder gleich -50 °C aufweist. Die Etiketten sind mit basischer, wässriger Waschflüssigkeit abwaschbar.

Bei der Verwendung von mehrfach wiederverwendeten Mehrwegbehältern, z.B. Bier-, Wasser- oder Limonadeflaschen in der Getränkeindustrie, unterliegen die verwendeten Behältnisse hohen Mehrwegquoten. Die Behältnisse werden bei jedem Rücklauf vor der Neubefüllung gereinigt, wobei beim Waschen der Behältnisse auch die Etiketten entfernt werden. Anschließend werden die Behältnisse neu befüllt und entsprechend dem eingefüllten Getränketyp neu etikettiert. Sind die Behältnisse für eine bestimmte Produktgruppe standardisiert, z.B. eine Bierflasche, so brauchen die zur Brauerei zurücklaufenden Flaschen nicht nach Biersorten vorsortiert zu werden, wie dies bei dauerhaft vordekorierten Flaschen der Fall wäre. Die unterschiedliche Etikettierung erfolgt in der Regel erst nach der Befüllung. Bei einer nicht abwaschbaren Direktbedruckung der Flasche müssten hohe Lagervorräte an jeweils passend vordekorierten Flaschen bereitgehalten werden. In der Getränkeindustrie erfolgt das Waschen der Behältnisse in der Regel mit heißer Waschflüssigkeit, wie etwa verdünnter Natronlauge, erhitzt auf 60 bis 90 °C, meist ohne zusätzliche mechanische Unterstützung in Form von Bürsten.

Wegen der standardisierten Abwaschbedingungen in der Getränkeindustrie werden bisher meistens Etiketten auf Papierbasis und wasserlösliche Nassleimklebstoffe auf Casein- oder Stärkebasis verwendet. Beim Abwaschen der Etiketten in der Waschstation wird die Wasserdurchlässigkeit von Papier dahingehend ausgenutzt, dass der üblicherweise verwendete Nassleimklebstoff relativ schnell mit der Waschflüssigkeit vollflächig in Kontakt kommt und sich in der vorgegebenen Waschzeit (im Bereich einiger Minuten) vollständig ablöst, wobei dann aber der Klebstoff in der Regel in der Waschflüssigkeit in Lösung geht. Dies hat den Nachteil, dass erhebliche Mengen an mit Klebstoffresten belastetem Abwasser entstehen. Insbesondere die häufig verwendeten Etikettenklebstoffe auf Caseinbasis ergeben eine starke Kontamination des Waschwassers. Es sind daher Klebstoffsysteme erwünscht, welche das Waschwasser möglichst wenig kontaminieren.

Häufig sind sogenannte "no label look"-Etiketten gewünscht. Hierbei handelt es sich um durchsichtige Kunststofffolienetiketten, welche den Blick auf den Inhalt des Behältnisses freilassen und beim Betrachter den Eindruck hervorrufen, dass das Behältnis kein Etikett aufweist sondern direkt bedruckt oder beschriftet ist. Anstelle von Papier werden hierfür Kunststofffolien als Trägermaterial verwendet. Kunststofffolien haben den Nachteil, dass sie nicht die hohe Permeabilität für Waschflüssigkeit besitzen wie Papier. Solche Folien verhindern den Zutritt der Waschflüssigkeit zur Grenzfläche von Klebstoff und Behälteroberfläche, so dass sich die nicht permeablen Folienetiketten bei Verwendung von herkömmlichem Klebstoff nur langsam vom Etikettenrand her ablösen lassen, was ohne zusätzliche mechanische Unterstützung wie etwa Bürsten, Hochdruckstrahl etc. in einer wirtschaftlich vertretbaren Zeitspanne keine vollständige Ablösung des Etiketts gestattet. Diese mechanischen Mittel sind des höheren Aufwands wegen unerwünscht.

Aus der WO 2009/003737 sind Etiketten mit wasserlösbaren UV-härtenden Klebstoffen bekannt. Eingesetzt werden spezielle Etiketten die entweder aus wasserdurchlässigen Materialien bestehen oder perforiert sind. Etiketten aus konventionellen Materialien sind bei Verwendung der beschriebenen Klebstoffe und Verklebungsverfahren nicht ablösbar. Aus der WO 01/46329 ist bekannt, in der Waschflüssigkeit sich auflösenden Klebstoff und sich auflösendes Trägermaterial zu verwenden. Dies führt zwar zu einer schnelleren Ablösung aber auch zu einer unerwünschten, hohen Belastung des Abwassers mit organischen Reststoffen. Aus der EP 951004 ist bekannt, Folienetiketten zu verwenden, welche bei erhöhter Temperatur in der Waschvorrichtung durch Rückschrumpfen die Form verändern, wobei die hierbei auftretenden Kräfte größer sind als die Klebekräfte und sich das Etikett ablöst. Der Nachteil von sich krümmenden, sich aufrollenden oder anderweitig die planare Form verändernden Etiketten ist, dass sie beim Waschvorgang einen relativ hohen Volumenbedarf haben und bei Verwendung von Standardwaschvorrichtungen der Getränkeindustrie zu einem Verstopfen der verwendeten, relativ engen Körbchen führen können, in welche die Flaschen individuell für den Waschvorgang eingesetzt werden. Formverändernde oder perforierte Folienetiketten, wie sie zur Verbesserung des Ablöseverhaltens bekannt sind, sind außerdem wegen der erforderlichen Vor- oder Nachbehandlung oder eines erforderlichen Mehrschichtaufbaus aufwändiger in der Herstellung und somit auch wesentlich teurer als Standardfolien. Gewünscht ist daher ein Klebstoffsystem, mit welchem auch herkömmliche, nicht permeable und nicht lösliche Folien, insbesondere nicht perforierte und auch unter Wärmeeinwirkung formstabile Folien sicher und schnell abgewaschen werden können, wobei das Waschwasser möglichst wenig kontaminiert werden soll. Eine weitere wichtige Anforderung an Etiketten für Mehrwegbehälter ist, dass sie zwar möglichst schnell mit heißer Waschflüssigkeit ablösbar sein sollen, andererseits aber eine Verklebung zeigen, welche gegenüber Kontakt mit Feuchtigkeit oder Wasser wie z.B. bei Lagerung im Freien (Bewitterung mit Regenwasser) oder beim Kühlen und Kontakt mit Kondens- oder Eiswasser möglichst resistent ist. Außerdem sollte das Klebstoffsystem gesundheitlich möglichst unbedenklich sein, sodass ein Einsatz auf Nahrungsmittelbehältern besonders vorteilhaft ist. Es stellt eine besondere Herausforderung dar, ein Klebstoffsystem zu finden,

welches die genannten, zum Teil gegensätzlichen Anforderungen erfüllt und welches die Verklebung und Ablösung von Etiketten aus konventionellen Trägermaterialien ermöglicht.

In der DE 103 10 889 wird ein Haftklebstoff beschrieben, welcher ein Polymer enthält, dass aus (Meth)acrylatmonomeren gebildet ist, einen einpolymerisierten Fotoinitiator enthält und UVvernetzbar ist. Der Haftklebstoff kann u.a. auch zum Aufkleben von Etiketten auf Substraten verwendet werden.

Der Erfindung liegt die Aufgabe zugrunde, ein Verfahren zum Verkleben und Ablösen von abwaschbaren Etiketten zur Verfügung zu stellen, wobei beklebte Gegenstände bei normaler Lagerung und Kühlung eine möglichst hohe Resistenz gegen vorzeitiges Ablösen der Etiketten zeigen, die Etiketten beim Waschen mit warmer Waschlösung aber möglichst schnell und ohne Rückstände ablösbar sind, wobei der Klebstoff möglichst vollständig auf dem abgelösten Etikett verbleibt und möglichst weder in das Waschwasser gelangt noch möglichst keine Rückstände auf dem Substrat hinterlässt, wobei kein besonders vorbehandeltes oder beim Waschen die Form veränderndes Trägermaterial benötigt wird und der Klebstoff gesundheitlich möglichst unbedenklich ist.

Die Aufgabe wird erfindungsgemäß gelöst durch ein Verfahren zum Verkleben von Etiketten auf einem Substrat, wobei

- auf dem Etikett oder auf dem Substrat ein strahlungsvernetzbarer Haftklebstoff aufgetragen wird,
- Etikett und Substrat zusammengeführt und miteinander verklebt werden,
- der Haftklebstoff vor dem Verkleben durch Bestrahlung mit einer Strahlungsdosis von 6 bis 18 $mJ/cm^2$ vernetzt wird,
- die Etiketten mit basischer, wässriger Waschflüssigkeit bei Temperaturen größer 25°C von dem Substrat wieder abgelöst werden,

und der Haftklebstoff mindestens ein strahlungsvernetzbares Poly(meth)acrylatpolymer enthält, welches vor der Vernetzung eine Glasübergangstemperatur von kleiner oder gleich -50 °C aufweist, und zu mindestens 60 Gew.% aus C1- bis C10-Alkyl(meth)acrylaten besteht und mindestens einen einpolymerisierten Fotoinitiator aufweist.

Der Begriff strahlungsvernetzbar bedeutet, dass der Haftklebstoff mindestens eine Verbindung mit mindestens einer strahlungsempfindlichen Gruppe enthält und bei Bestrahlung eine Vernetzungsreaktion induziert wird. Die Bestrahlung erfolgt vorzugsweise mit aktinischer Strahlung, vorzugsweise UV-Licht, insbesondere UV-C Strahlung.

Vorzugsweise wird der strahlungsvernetzbare Haftklebstoff auf einer Seite des Etikettenmaterials aufgebracht. Anschließend wird der Haftklebstoff durch Bestrahlung vernetzt und auf diese Weise ein Klebeetikett hergestellt. Das Trägermaterial des Etiketts ist vorzugsweise wasserunlöslich, d.h. es löst sich nicht in Wasser bei Raumtemperatur (25°C) und idealerweise auch nicht bei den Temperaturen des Waschvorgangs, die bei 55 bis 90 °C, z.B. bei 80 °C liegen können. Das Trägermaterial kann Papier oder eine Kunststofffolie sein.

Das Trägermaterial ist im Falle von Kunststofffolien vorzugsweise ausgewählt aus Polyolefinen (insbesondere Polyethylen, Polypropylen), Polyolefincopolymeren, PVC, Cellulose, Polyacetat, Polyester (insbesondere bioabbaubare Polylactate) und Cycloolefin Copolymer (COC). Die Dicke der Folien ist vorzugsweise von 10 bis 200 $\mu$m oder von 30 bis 100 $\mu$m. Vorzugsweise handelt es sich bei den Kunststofffolien um Folien, die keine Schrumpffolien sind, die nicht gereckt sind und/oder unter Wärmeeinwirkung beim Abwaschen keine Formveränderungen zeigen oder perforiert oder wasserdurchlässig sind. Bevorzugte Trägermaterialien sind Papier, Polyethylen, Polypropylen, Cellulose, Polyacetat und Polyester.

Das auf dem Substrat aufgeklebte Etikett ist ablösbar mit einer basischen Waschflüssigkeit bei erhöhten Temperaturen von größer 25°C. Die Waschflüssigkeit hat einen basischen pH- Wert, insbesondere von 8 bis 11, z.B. ca. 8. Die Waschtemperatur ist dabei vorzugsweise mindestens 50°C insbesondere 60 bis 90°C. Geeignet ist z.B. 1-2%ige wässrige Natronlauge.

Im Folgenden werden gelegentlich die Bezeichnung "(Meth)acryl..." und ähnliche Bezeichnungen als abkürzende Schreibweise verwendet für "Acryl... oder Methacryl...".

Bei dem strahlungsvernetzbaren Haftklebstoff handelt es sich um einen Klebstoff auf Basis eines Polymers mit einpolymerisiertem Fotoinitiator. Das Polymer kann hergestellt werden durch radikalische Polymerisation von ethylenisch ungesättigten Monomeren unter Copolymerisation von mindestens einer strahlungsempfindlichen, organisch polymerisierbaren organischen Verbindung. Strahlungsempfindliche, radikalisch polymerisierbare organische Verbindungen werden im Folgenden kurz als polymerisierbarer Fotoinitiator bezeichnet. Der polymerisierbare Fotoinitiator kann durch radikalische Copolymerisation in die Polymerkette von Copolymeren eingebaut werden. Polymerisierbare Fotoinitiatoren haben vorzugsweise folgenden prinzipiellen Aufbau:

A-X-B

wobei A ein einwertiger organischer Rest ist, welcher als strahlungsempfindliche Gruppe vorzugsweise eine Phenongruppe aufweist,

X eine Estergruppe ist, ausgewählt aus -O-C(=O)-, -(C=O)-O und -O-(C=O)-O-, und

B ein einwertiger organischer Rest ist, welcher eine ethylenisch ungesättigte, radikalisch polymerisierbare Gruppe enthält. Bevorzugte Reste A sind Reste, welche mindestens ein Strukturelement enthalten, welches abgeleitet ist von Phenonen, insbesondere von Acetophenonen oder Benzophenonen. Bevorzugte Reste B enthalten mindestens eine, vorzugsweise genau eine Acryl- oder Methacrylgruppe.

Die ethylenisch ungesättigte Gruppe kann direkt an die Gruppe X gebunden sein. Ebenso kann die strahlungsempfindliche Gruppe direkt an die Gruppe X gebunden sein. Es können sich aber auch zwischen ethylenisch ungesättigter Gruppe und der Gruppe X bzw. zwischen strahlungsempfindlicher Gruppe und Gruppe X jeweils eine Spacergruppe (Abstandshalter) befinden. Die Spacergruppe kann z.B. ein Molekulargewicht von bis zu 500, insbesondere bis zu 300 oder 200 g/Mol aufweisen.

Geeignete Fotoinitiatoren sind z.B. Verbindungen mit Acetophenon- oder Benzophenonstruktureinheiten, beispielsweise beschrieben in EP 377191 A oder EP 1213306 A. Eine bevorzugte Gruppe X ist die Carbonatgruppe -O-(C=O)-O-. Bevorzugte polymerisierbare Fotoinitiatoren sind Verbindungen der Formel:

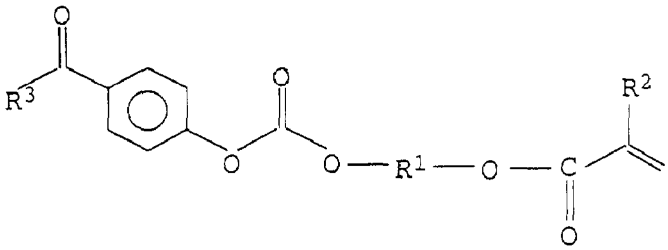

worin R1 für einen organischen Rest mit bis zu 30 C-Atomen, R2 für ein H-Atom oder eine Methylgruppe und R3 für eine substituierte oder unsubstituierte Phenylgruppe oder für eine C1-C4-Alkylgruppe steht. R1 steht besonders bevorzugt für eine Alkylengruppe, insbesondere für eine C2-C8-Alkylengruppe. R3 steht besonders bevorzugt für eine Methylgruppe oder für eine Phenylgruppe, ganz besonders bevorzugt für eine Phenylgruppe.

Weitere, als copolymerisierbare Fotoinitiatoren geeignete Acetophenon- und Benzophenonderivate sind z.B. solche der Formel

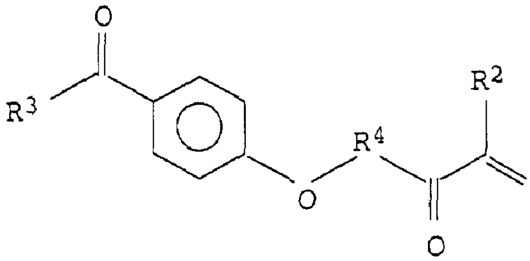

worin R2 und R3 die obige Bedeutung haben kann und R4 für eine Einfachbindung oder für (-CH2-CH2-O)n stehen kann, wobei n für eine ganze Zahl von 1 bis 12 steht.

Der strahlungsvernetzbare Haftklebstoff enthält als hauptsächlichen oder alleinigen Klebewirkstoff ein Polymer, welches durch radikalische Polymerisation von Acrylmonomeren, worunter im Folgenden auch Methacrylmonomere verstanden werden, und optional weiteren, copolymerisierbaren Monomeren erhältlich ist. Es handelt sich um ein Poly(meth)acrylatpolymer, welches zu mindestens 60 Gew.-%, ganz besonders bevorzugt zu mindestens 80 Gew.-% aus C1- bis C10-Alkyl(meth)acrylaten aufgebaut ist und mindestens einen einpolymerisierten Fotoinitiator aufweist. Genannt seien insbesondere C1-C8 Alkyl(meth)acrylate, z.B. Methyl(meth)acrylat, Ethylacrylat, n-Butylacrylat, n-Hexylacrylat und 2-Ethylhexylacrylat. In einer Ausführungsform der Erfindung besteht das Poly(meth)acrylatpolymer zu mindestens 80 Gew.% aus mindestens einem Acrylat welches ausgewählt ist aus der Gruppe bestehend aus n-Butylacrylat, n-Hexylacrylat, 2-Ethyl-hexylacrylat und deren Mischungen oder das Poly(meth)acrylatpolymer besteht zu mindestens 90 Gew.% aus 2-Ethyl-hexylacrylat. Wobei in allen Fällen Art und Menge der jeweiligen Monomere so eingestellt sind, dass das Polymer vor der Vernetzung eine Glasübergangstemperatur von kleiner oder gleich -40 °C aufweist.

Es handelt sich vorzugsweise um ein mit UV-Licht vernetzbares Poly(meth)acrylatpolymer, bei welchem der Fotoinitiator einpolymerisiert ist, d.h. an das Polymer gebunden ist. Durch Bestrahlung mit energiereichem Licht, insbesondere UV-Licht bewirkt der Fotoinitiator eine Vernetzung des Polymeren, vorzugsweise durch eine chemische Pfropfreaktion des Fotoinitiators mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H

Gruppierung erfolgen. Das Polymer enthält vorzugsweise 0,0001 bis 1 mol, besonders bevorzugt 0,0002 bis 0,1, ganz besonders bevorzugt 0,0003 bis 0,01 mol des Fotoinitiators, bzw. der als Fotoinitiator wirksamen, an das Polymer gebundenen Molekülgruppe, pro 100 g Polymer.

Weitere, von Acrylaten verschiedene Monomere, aus denen das strahlungsvernetzbare Polymer zusätzlich aufgebaut sein kann, sind z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren. Als vinylaromatische Verbindungen kommen z.B. Vinyltoluol a- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt sind Vinylether von 1 bis 4 C-Atome enthaltenden Alkoholen. Als Kohlenwasserstoffe mit 2 bis 8 C-Atomen und zwei olefinischen Doppelbindungen seien Butadien, Isopren und Chloropren genannt. Als weitere Monomere in Betracht kommen insbesondere auch Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch (Meth)acrylamid und Hydroxylgruppen enthaltende Monomere, insbesondere C1-C10-Hydroxyalkyl(meth)acrylate. Darüber hinaus seien Phenyloxyethylglykolmono-(meth)acrylat, Glydidylacrylat, Glycidylmethacrylat, Amino-(meth)acrylate wie 2-Aminoethyl(meth)acrylat genannt. Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Die strahlungsvernetzbaren Polymere können durch Copolymerisation der monomeren Komponenten, einschließlich des copolymerisierbaren Fotoinitiators unter Verwendung der üblichen Polymerisationsinitiatoren sowie optional von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die Polymere entweder durch Emulsionspolymerisation in Wasser oder durch Polymerisation der Monomeren in organischen Lösungsmitteln, insbesondere in organischen Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt.

Die Polymerisate können bei Temperaturen von 20 bis 150 °C, vorzugsweise bei Temperaturen im Bereich von 70 bis 120 °C und Drucken von 0,1 bis 100 bar (absolut), bevorzugt bei 0,3 bis 10 bar, in Gegenwart von 0,01 bis 10 Gew.-% an Peroxiden oder Azostartern als Polymerisationsinitiatoren, bezogen auf die Monomeren und in Gegenwart von 0 bis 200 Gew.-% an indifferenten Lösungsmitteln, bevorzugt 5 bis 25 Gew.-%, bezogen auf die Monomeren, d.h. durch Lösungs- oder Substanzpolymerisation hergestellt werden. Vorzugsweise erfolgt die Reaktion unter zunehmendem Vakuum, z.B. durch Absenkung des Drucks von Normaldruck (1 bar) auf 500 mbar (absolut). Lösungsmittel sind beispielsweise Kohlenwasserstoffe, Alkohole wie Methanol, Ethanol, Propanol, Butanol, Isobutanol, Ketone wie Aceton, Methylethylketon, Methylisobutylketon, Essigsäureethylester, Nitrile wie Acetonitril und Benzonitril oder Gemische aus den genannten Lösemitteln. In einer bevorzugten Ausführungsform werden als Lösungsmittel für die Polymerisation ein oder mehrere Ketone mit einem Siedepunkt von unter 150°C bei Normaldruck (1 bar).

Als Polymerisationsinitiatoren kommen beispielsweise Azoverbindungen, Ketonperoxide und Alkylperoxide in Betracht, z.B. Acylperoxide wie Benzoylperoxid, Dilauroylperoxid, Didecanoylperoxid, Isononanoylperoxid, Alkylester wie tert.-Butyl-tert.-pivalat, tert.-Butyl-per-2-ethylhexanoat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, Di-tert.-Butyl-peroxid und Peroxodicarbonate. Des Weiteren können als Initiatoren Azostarter wie beispielsweise 2,2'-Azobisisobutyronitril, 2,2'-Azobis(methylisobutyrat) oder 2,2'-Azobis(2,4-dimethylvaleronitril) Verwendung finden.

Für die Durchführung der Polymerisation können dem Reaktionsgemisch auch den Polymerisationsgrad senkende Verbindungen, sogenannte Polymerisationsregler zugesetzt werden, z.B. in Mengen von 0,1 bis 0,8 Gew.-Teile, bezogen auf 100 Gew.-Teile der zu polymerisierenden Monomeren. Geeignet sind z.B. Verbindungen mit einer Thiolgruppe beispielsweise Mercaptane wie Mercaptoethanol, tert.-Butylmercaptan, Mercaptobernsteinsäure, Thioglycolsäureethylhexylester, 3-Mercaptopropyltrimethoxysilan oder Dodecylmercaptan. In einer Ausführungsform werden keine Molekulargewichtsregler eingesetzt.

Die Glasübertragungstemperatur (Tg) des strahlungsvernetzbaren Polymers ist kleiner oder gleich -50°C oder kleiner oder gleich -55 °C, vorzugsweise von -60 bis -40°C oder von -60 bis - 50 °C. Die Glasübertragungstemperatur lässt sich nach üblichen Methoden wie Differentialthermoanalyse oder Differential Scanning Calorimetrie (s. z.B. ASTM 3418/82, sog. "midpoint temperature") bestimmen. Das strahlungsvernetzbare Polymer hat vorzugsweise einen K-Wert von 30 bis 80, besonders bevorzugt von 40 bis 60, gemessen in Tetrahydrofuran (1%ige Lösung, 21 °C). Der K-Wert nach Fikentscher ist ein Maß für das Molekulargewicht und die Viskosität des Polymerisats.

Durch die sogenannte Foxgleichung ist es dem Fachmann möglich, Copolymere im geeigneten Tg-Bereich vorab zu identifizieren und diese durch geeignete Variation von Art und Menge der Monomeren gezielt herzustellen.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g{}^1 + x^2/T_g{}^2 + .... x^n/T_g{}^n,$$

wobei $x^1$, $x^2$, .... $x^n$ die Massenbrüche der Monomeren 1, 2, .... n und $T_g1$, $T_g{}^2$, .... $T_g{}^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Der strahlungsvernetzbare Haftklebstoff wird vorzugsweise als sogenannter Schmelzhaftklebstoff (Hot-Melt), d.h. in lösemittelfreier, schmelzbarer Form eingesetzt. Herstellungsbedingtes Lösungsmittel wird vorher nach geeigneten Verfahren entfernt, vorzugsweise auf einen Restgehalt von kleiner 0,5 Gew.%, bezogen auf das Polymer. Zur Herstellung der Beschichtungen werden die Schmelzhaftklebstoffe als Schmelze auf die zu beschichtenden Materialien, z.B. Etiketten aufgetragen , wobei die beschichtete Oberfläche zumindest teilweise mit einem erfindungsgemäßen Klebstoff beschichtet ist. Der Schmelzhaftklebstoff kann als Schmelze, d.h. im Allgemeinen bei Temperaturen von 80 bis 160 °C aufgetragen werden. Die Auftragsmenge des Haftklebstoffs ist vorzugsweise von 10 bis 20 $g/m^2$, besonders bevorzugt von 12 bis 18 $g/m^2$ oder von 14 bis 16 $g/m^2$. Bevorzugte Schichtdicken sind z.B. 10 bis 20 Mikrometer.

Die vernetzbaren Polymere können dann mit energiereicher Strahlung, vorzugsweise UV-Licht, insbesondere UV-C Strahlung (200-280 nm) bestrahlt werden, so dass eine Vernetzung erfolgt. Im Allgemeinen werden die beschichteten Substrate dazu auf ein Transportband gelegt und das Transportband an einer Strahlungsquelle, z.B. einer UV-Lampe vorbeigeführt. Der Vernetzungsgrad der Polymerisate hängt von der Dauer und der Intensität der Bestrahlung ab. Erfindungsgemäß beträgt die Strahlungsdosis von 6 bis 18 $mJ/cm^2$, vorzugsweise von 6 bis 15 $mJ/cm^2$, von 8 bis 15 $mJ/cm^2$ oder von 8 bis 12 $mJ/cm^2$. Als UV-Strahler können die üblichen Strahler, beispielsweise Quecksilbermitteldrucklampen mit einer Strahlungsleistung von 80 bis 240 Watt/cm eingesetzt werden.

Das Verhältnis von Strahlungsdosis zu Auftragsmenge beträgt vorzugsweise von 3 bis 15 J/g oder von 4 bis 13 J/g.

Der Haftklebstoff kann zur Herstellung von Haftklebeetiketten beispielsweise auch im Transferauftrag auf Träger wie Papier oder Polymerfolien aufgebracht werden, indem er zunächst auf abhäsiv beschichteten Trägermaterialien, beispielsweise silikonisiertem Papier aufgebracht und bestrahlt wird und anschließend beispielsweise auf Papier kaschiert wird. Nach dem Abziehen des silikonisierten Papiers kann die haftklebrige Schicht optional nochmals bestrahlt werden. Die Haftklebemittel können in an sich üblicher Form modifiziert und/oder konfektioniert werden.

Der erfindungsgemäße Haftklebstoff ist ein Material, welches insbesondere nach der Vernetzung durch Bestrahlung haftklebende Eigenschaften aufweist. Ein Haftklebstoff ist ein viskoelastischer Klebstoff, dessen abgebundener Film bei Raumtemperatur (20°C) in trockenem Zustand permanent klebrig und klebfähig bleibt.

Das mit Klebstoff beschichtete Etikett wird auf ein Substrat, z.B. eine Verpackung aus Glas oder Kunststoff, insbesondere eine Getränkeflasche, aufgeklebt. Bevorzugte Verpackungen sind Lebensmittelverpackungen, z.B. Flaschen aus Glas oder Kunststoff, z.B. aus Polyethylenterephtalat. Weitere geeignete Substrate sind z.B. Trays oder Tabletts, wie sie z.B. in Flugzeugen verwendet werden. Das Etikett kann durch Waschen mit einer erwärmten, basischen Waschflüssigkeit entfernt werden. Die Temperatur der Waschflüssigkeit ist größer 25°C, vorzugsweise mindestens 50°C, z.B. 60 bis 90 °C oder ca. 80 °C. Der pH-Wert der Waschflüssigkeit ist basisch, d.h. größer als 7, insbesondere von 9 bis 11, z.B. ca. 10.

Gegenstand der Erfindung ist ein Verfahren, zum Verkleben von Etiketten auf einem Substrat und anschließendem Ablösen der Etiketten, wobei die Etiketten wie oben beschrieben auf einem Substrat verklebt werden und mit basischer, wässriger Waschflüssigkeit bei Temperaturen größer 25°C von dem Substrat wieder abgelöst werden. Bei erfindungsgemäßen Klebeetiketten bleiben nach dem Aufkleben auf ein Substrat (z.B. Glas oder Kunststoff wie z.B. Polyethylenterephtalat) und späterem Ablösen des Etiketts mit basischer, wässriger Waschflüssigkeit vorzugsweise mindestens 95 Gew.%, insbesondere 97 bis 100 Gew.% des Haftklebstoffs auf dem abgelösten Etikett haften. Am Ende des Waschvorgangs verbleiben vorzugsweise maximal 5% oder maximal 2%, z.B. 0 bis 2% an nicht abgelösten Etiketten auf dem Substrat.

Für eine gute Ablösbarkeit ist es nicht unbedingt erforderlich, dass das Klebeetikett wasserdurchlässig ist, perforiert ist oder ähnliche Hilfsmittel aufweist, um einen schnellen Kontakt von Waschwasser und Klebstoff beim Waschvorgang zu ermöglichen. Erfindungsgemäß ist auch ohne derartige Hilfsmittel ein ausreichend schnelles Ablösen des Etiketts vom Substrat möglich. Es ist auch nicht unbedingt erforderlich, dass das Etikett beim Waschvorgang seine Form verändert, um mittels der bei der Formveränderung auftretenden Kräfte die Ablösung des Etiketts zu erleichtern. Bevorzugt sind daher Klebeetiketten, bei denen das Trägermaterial nicht wasserdurchlässig ist oder nicht perforiert ist oder unter Abwaschbedingungen formstabil ist.

Die erfindungsgemäßen Klebeetiketten zeichnen sich dadurch aus, dass sie auch nach längerer Lagerung im Freien, was normalerweise zu einer Verschlechterung der Abwaschbarkeit führt, noch schnell und rückstandsfrei abwaschbar sind, insbesondere auch bei Verwendung von Kunststofffolienetiketten, welche normalerweise wegen ihrer Wasserundurchlässigkeit schlecht ablösbar sind.

Gegenstand der Erfindung ist auch die Verwendung des oben näher beschriebenen, strahlungsvernetzbaren Haftklebstoffs zur Herstellung von nach Bestrahlung mit einer Strahlungsdosis von 5 bis 18 mJ/$cm^2$ verklebbaren und abwaschbaren Etiketten, wobei der Haftklebstoff mindestens ein strahlungsvernetzbares Polymer enthält, welches vor der Vernetzung eine Glasübergangstemperatur von kleiner oder gleich -50 °C aufweist und zu mindestens 60 Gew.% aus C1- bis C10-Alkyl(meth)acrylaten besteht und mindestens einen einpolymerisierten Fotoinitiator aufweist.

Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Beispiel B1:

Schmelzhaftklebstoff: Acrylatcopolymer aus 2-Ethylhexylacrylat, Methylmethacrylat und einpolymerisiertem Fotoinitiator
Tg = -60 °C

Vergleichsbeispiel V1:

Schmelzhaftklebstoff acResin 204 UV: Acrylatcopolymer aus n-Butylacrylat, 2-Ethylhexylacrylat, Methylacrylat, Acrylsäure und einpolymerisiertem Fotoinitiator
Tg = -34 °C

<u>Wash-Off-Tests</u>

Folienetiketten aus Polyethylenfolien mit einer Dicke von 85 μm (Renolit® PE 85μ) und eine Größe von 60 x 80 mm wurden mit den in der nachfolgenden Tabelle jeweils angegebenen Mengen Schmelzhaftklebstoff beschichtet und nach dem Trocknen auf Glasflaschen aufgeklebt.

Nach Lagerung der etikettierten Flaschen wurden die Etiketten bei 75-80°C mit einer Waschflüssigkeit (2%ige wässrige NaOH-Lösung, 0,5% Calgonit® 1144) abgelöst. Es wurde die Zeit gemessen bis zur vollständigen Ablösung des Etiketts und es wurde die Form des abgelösten Etiketts beurteilt. Die Ergebnisse sind in der folgenden Tabelle zusammengefasst.

Tabelle 1: Wash-Off Tests Folienetiketten

| Beispiel | Auftragmenge [g/$m^2$] | UV-C Dosis [mJ/$cm^2$] | Ablösezeit nach Lagerung 7 Tage | Ablösezeit nach 30 Tagen Außenbewitterung | Etikettenform nach Ablösung |
|---|---|---|---|---|---|
| B1 Tg -60°C | 14-16 | 8 | 15-50 s | 20-50 s | glatt, formstabil |
| B1 Tg -60°C | 20 | 15 | 24 s | | |
| B1 Tg -60°C | 20 | 5 | > 8 min | | keine vollständige Ablösung |
| V1 Tg -34°C | 14-16 | 20 | nach 10 min noch 100%ige Verklebung | nach 10 min noch 100%ige Verklebung | keine Ablösung |
| V1 Tg -34°C | 14-16 | 10 | nach 10 min noch 100%ige Verklebung | nach 10 min noch 100%ige Verklebung | keine Ablösung |

Die erfindungsgemäßen Beispiele zeigen einen Adhäsionsbruch der Klebstoffschicht beim Ablösen, d.h. der Klebstoff bleibt am Etikett haften, ohne dass Rückstände auf der Glasflasche verbleiben.

Die erfindungsgemäßen Beispiele zeichnen sich gegenüber den Vergleichszusammensetzungen durch eine unerwartete Kombination vorteilhafter Eigenschaften aus hinsichtlich guter Ablösung auch nach längerer Außenbewitterung und hinsichtlich glatter, planarer Etikettenformen nach dem Ablösen, wodurch die Gefahr einer Blockierung der Waschvorrichtung vermindert wird.

## Patentansprüche

1. Verfahren zum Verkleben von Etiketten auf einem Substrat und anschließendem Ablösen der Etiketten, wobei

   - auf dem Etikett oder auf dem Substrat ein strahlungsvernetzbarer Haftklebstoff aufgetragen wird,
   - Etikett und Substrat zusammengeführt und miteinander verklebt werden,
   - der Haftklebstoff vor dem Verkleben durch Bestrahlung mit einer Strahlungsdosis von 6 bis 18 mJ/cm$^2$ vernetzt wird,
   - die Etiketten mit basischer, wässriger Waschflüssigkeit bei Temperaturen größer 25°C von dem Substrat wieder abgelöst werden,

   und der Haftklebstoff mindestens ein strahlungsvernetzbares Poly(meth)acrylatpolymer enthält, welches vor der Vernetzung eine Glasübergangstemperatur von kleiner oder gleich -50 °C aufweist, bestimmt durch Differential Scanning Calorimetrie nach ASTM 3418/82, und zu mindestens 60 Gew.% aus C1- bis C10-Alkyl(meth)acrylaten besteht und mindestens einen einpolymerisierten Fotoinitiator aufweist.

2. Verfahren nach dem vorhergehenden Anspruch, **dadurch gekennzeichnet, dass** die Auftragsmenge des Haftklebstoffs 12 bis 18 g/m$^2$ beträgt.

3. Verfahren nach einem der vorhergehenden Ansprüche, **dadurch gekennzeichnet, dass** das Verhältnis von Strahlungsdosis zu Auftragsmenge von 3 bis 15 J/g beträgt.

4. Verfahren nach einem der vorhergehenden Ansprüche, **dadurch gekennzeichnet, dass** das strahlungsvernetzbare Polymer vor Vernetzung eine Glasübergangstemperatur von -40 bis -60 °C aufweist.

5. Verfahren nach einem der vorhergehenden Ansprüche, **dadurch gekennzeichnet, dass** die Bestrahlung mit UV-Licht erfolgt.

6. Verfahren nach dem vorhergehenden Anspruch, **dadurch gekennzeichnet, dass** der Fotoinitiator in nicht einpolymerisierter Form die allgemeine Struktur
   A-X-B aufweist, wobei
   A ein einwertiger organischer Rest ist, welcher eine Phenongruppe aufweist,
   X eine Estergruppe ist, ausgewählt aus -O-C(=O)-, -(C=O)-O und -O-(C=O)-O-,
   und B ein einwertiger organischer Rest ist, welcher eine ethylenisch ungesättigte, radikalisch polymerisierbare Gruppe enthält.

7. Verfahren nach dem vorhergehenden Anspruch, **dadurch gekennzeichnet, dass** der Fotoinitiator in nicht einpolymerisierter Form die allgemeine Struktur

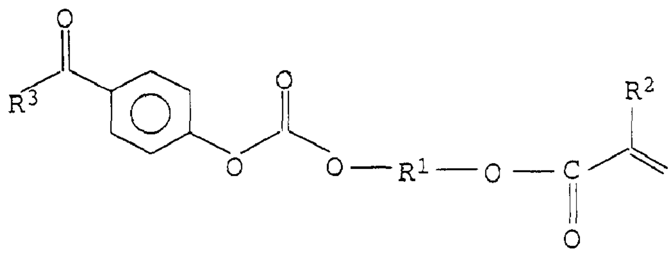

   aufweist, worin R1 für einen divalenten organischen Rest mit bis zu 30 C-Atomen, R2 für ein H-Atom oder eine Methylgruppe und R3 für eine substituierte oder unsubstituierte Phenylgruppe oder für eine C1-C4-Alkylgruppe steht.

8. Verfahren nach einem der vorhergehenden Ansprüche, **dadurch gekennzeichnet, dass** Haftklebstoff mindestens ein der strahlungsvernetzbares Poly(meth)acrylatpolymer enthält, wobei das Poly(meth)acrylatpolymer zu mindestens 80 Gew.% aus mindestens einem Acrylat besteht, welches ausgewählt ist aus der Gruppe bestehend aus n-Butylacrylat, n-Hexylacrylat, 2-Ethyl-hexylacrylat und deren Mischungen.

9. Verfahren nach einem der vorhergehenden Ansprüche, **dadurch gekennzeichnet, dass** der Haftklebstoff mindestens ein der strahlungsvernetzbares Poly(meth)acrylatpolymer enthält, wobei das Poly(meth)acrylatpolymer zu mindestens 90 Gew.% aus 2-Ethyl-hexylacrylat besteht.

10. Verfahren nach einem der vorhergehenden Ansprüche, **dadurch gekennzeichnet, dass** das Trägermaterial des Etiketts ausgewählt ist aus Papier, Polyethylen, Polypropylen, Cellulose, Polyacetat und Polyester.

11. Verfahren nach einem der vorhergehenden Ansprüche, **dadurch gekennzeichnet, dass** das Trägermaterial des Etiketts nicht perforiert ist und unter Abwaschbedingungen formstabil ist.

12. Verfahren nach einem der vorhergehenden Ansprüche, **dadurch gekennzeichnet, dass** das Substrat ausgewählt ist aus Verpackungen mit Glas- oder Kunststoffoberflächen.

13. Verfahren nach dem vorherigen Anspruch, **dadurch gekennzeichnet, dass** die Ablösung mit einer Waschflüssigkeit mit einem pH von 9 bis 11 und bei einer Temperatur von 60 bis 90°C erfolgt.

14. Verfahren nach einem der beiden vorhergehenden Ansprüche, **dadurch gekennzeichnet, dass** der Haftklebstoff nach dem Ablösen des Etiketts mit basischer, wässriger Waschflüssigkeit zu mindestens 95 Gew.% auf dem abgelösten Etikett haften bleibt und/oder maximal 2% an nicht abgelösten Etiketten auf dem Substrat verbleiben.

15. Verwendung von strahlungsvernetzbarem Haftklebstoff zur Herstellung von nach Bestrahlung mit einer Strahlungsdosis von 6 bis 18 mJ/cm$^2$ verklebbaren und abwaschbaren Etiketten, wobei der Haftklebstoff mindestens ein strahlungsvernetzbares Poly(meth)acrylatpolymer enthält, welches vor der Vernetzung eine Glasübergangstemperatur von kleiner oder gleich -50 °C aufweist, bestimmt durch Differential Scanning Calorimetrie nach ASTM 3418/82, und zu mindestens 60 Gew.% aus C1- bis C10-Alkyl(meth)acrylaten besteht und mindestens einen einpolymerisierten Fotoinitiator aufweist.

## Claims

1. A method for adhesively bonding labels to a substrate and subsequently detaching the labels, where

- a radiation-crosslinkable pressure-sensitive adhesive is applied to the label or to the substrate,
- label and substrate are brought together and bonded to one another,
- the pressure-sensitive adhesive is crosslinked prior to bonding by irradiation with a radiation dose of 6 to 18 mJ/cm$^2$,
- the labels are detached from the substrate again with basic, aqueous wash liquid at temperatures greater than 25°C,

and the pressure-sensitive adhesive comprises at least one radiation-crosslinkable poly(meth)acrylate polymer which prior to crosslinking has a glass transition temperature of less than or equal to -50°C, determined by differential scanning calorimetry in accordance with ASTM 3418/82, and is composed of at least 60% by weight of C1 to C10 alkyl (meth)acrylates and comprises at least one copolymerized photoinitiator.

2. The method according to the preceding claim, wherein the application rate of the pressure-sensitive adhesive is 12 to 18 g/m$^2$.

3. The method according to either of the preceding claims, wherein the ratio of radiation dose to application rate is from 3 to 15 J/g.

4. The method according to any of the preceding claims, wherein the radiation-crosslinkable polymer prior to crosslinking has a glass transition temperature of -40 to -60°C.

5. The method according to any of the preceding claims, wherein the irradiation takes place with UV light.

6. The method according to the preceding claim, wherein the photoinitiator in uncopolymerized form has the general structure
A-X-B, where
A is a monovalent organic radical which contains a phenone group,
X is an ester group selected from -O-C(=O)-, -(C=O)-O, and -O-(C=O)-O-, and
B is a monovalent organic radical which comprises an ethylenically unsaturated, free-radically polymerizable group.

7. The method according to the preceding claim, wherein the photoinitiator in uncopolymerized form has the general structure

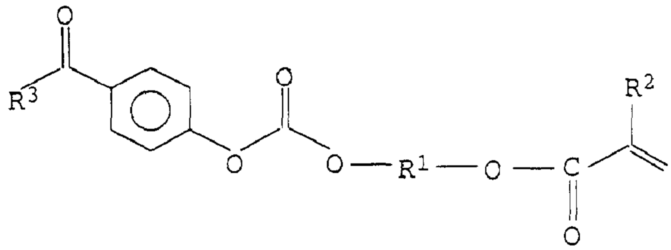

in which R1 is a divalent organic radical having up to 30 C atoms, R2 is an H atom or a methyl group, and R3 is a substituted or unsubstituted phenyl group or is a C1-C4 alkyl group.

8. The method according to any of the preceding claims, wherein the pressure-sensitive adhesive comprises at least one radiation-crosslinkable poly(meth)acrylate polymer, the poly(meth)acrylate polymer being composed of at least 80% by weight of at least one acrylate which is selected from the group consisting of n-butyl acrylate, n-hexyl acrylate, 2-ethylhexyl acrylate, and mixtures thereof.

9. The method according to any of the preceding claims, wherein the pressure-sensitive adhesive comprises at least one radiation-crosslinkable poly(meth)acrylate polymer, the poly(meth)acrylate polymer being composed of at least 90% by weight of 2-ethylhexyl acrylate.

10. The method according to any of the preceding claims, wherein the backing material of the label is selected from paper, polyethylene, polypropylene, cellulose, polyacetate, and polyester.

11. The method according to any of the preceding claims, wherein the backing material of the label is not perforated and is dimensionally stable under wash-off conditions.

12. The method according to any of the preceding claims, wherein the substrate is selected from packaging having surfaces of glass or of plastic.

13. The method according to the preceding claim, wherein the detachment with a wash liquid takes place with a pH of 9 to 11 and at a temperature of 60 to 90°C.

14. The method according to either of the two preceding claims, wherein, following the detachment of the label with basic, aqueous wash liquid, the pressure-sensitive adhesive remains adhering to the detached label to an extent of at least 95% by weight and/or not more than 2% of undetached labels remain on the substrate.

15. The use of radiation-crosslinkable pressure-sensitive adhesive for producing labels which after irradiation with a radiation dose of 6 to 18 mJ/cm$^2$ can be adhesively bonded and washed off, the pressure-sensitive adhesive comprising at least one radiation-crosslinkable poly(meth)acrylate polymer which prior to crosslinking has a glass transition temperature of less than or equal to -50°C, determined by differential scanning calorimetry in accordance with ASTM 3418/82, and is composed of at least 60% by weight of C1 to C10 alkyl (meth)acrylates and comprises at least one copolymerized photoinitiator.

## Revendications

1. Procédé pour coller des étiquettes sur un substrat, puis décoller les étiquettes, selon lequel

   - un adhésif de contact réticulable par rayonnement est appliqué sur l'étiquette ou sur le substrat,
   - l'étiquette et le substrat sont réunis et collés l'un avec l'autre,
   - l'adhésif de contact est réticulé avant le collage par exposition à un rayonnement avec une dose de rayonnement de 6 à 18 $mJ/cm^2$,
   - les étiquettes sont décollées du substrat avec un liquide de lavage aqueux basique à des températures supérieures à 25 °C,

   et l'adhésif de contact contient au moins un polymère de poly(méth)acrylate réticulable par rayonnement, qui présente avant la réticulation une température de transition vitreuse inférieure ou égale à -50 °C, déterminée par calorimétrie différentielle à balayage selon ASTM 3418/82, et est constitué d'au moins 60 % en poids de (méth)acrylates d'alkyle en C1 à C10, et comprend au moins un photoinitiateur copolymérisé.

2. Procédé selon la revendication précédente, **caractérisé en ce que** la quantité d'adhésif de contact appliquée est de 12 à 18 $g/m^2$.

3. Procédé selon l'une quelconque des revendications précédentes, **caractérisé en ce que** le rapport entre la dose de rayonnement et la quantité appliquée est de 3 à 15 J/g.

4. Procédé selon l'une quelconque des revendications précédentes, **caractérisé en ce que** le polymère réticulable par rayonnement présente avant la réticulation une température de transition vitreuse de - 40 à -60 °C.

5. Procédé selon l'une quelconque des revendications précédentes, **caractérisé en ce que** l'exposition à un rayonnement a lieu avec de la lumière UV.

6. Procédé selon la revendication précédente, **caractérisé en ce que** le photoinitiateur présente sous forme non copolymérisée la structure générale
   A-X-B, dans laquelle
   A est un radical organique monovalent, qui comprend un groupe phénone,
   X est un groupe ester, choisi parmi -O-C(=O)-, -(C=O)-O et -O-(C=O)-O-,
   et B est un radical organique monovalent, qui contient un groupe éthyléniquement insaturé, polymérisable par voie radicalaire.

7. Procédé selon la revendication précédente, **caractérisé en ce que** le photoinitiateur présente sous forme non copolymérisée la structure générale

   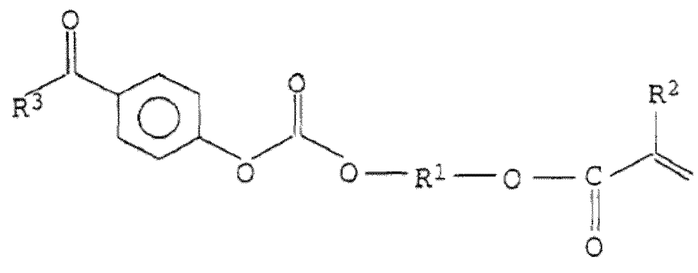

   dans laquelle R1 représente un radical organique bivalent contenant jusqu'à 30 atomes C, R2 représente un atome H ou un groupe méthyle, et R3 représente un groupe phényle substitué ou non substitué ou un groupe alkyle en C1-C4.

8. Procédé selon l'une quelconque des revendications précédentes, **caractérisé en ce que** l'adhésif de contact contient au moins un polymère de poly(méth)acrylate réticulable par rayonnement, le polymère de poly(méth)acrylate étant constitué d'au moins 80 % en poids d'au moins un acrylate qui est choisi dans le groupe constitué par l'acrylate de n-butyle, l'acrylate de n-hexyle, l'acrylate de 2-éthyl-hexyle et leurs mélanges.

**9.** Procédé selon l'une quelconque des revendications précédentes, **caractérisé en ce que** l'adhésif de contact contient au moins un polymère de poly(méth)acrylate réticulable par rayonnement, le polymère de poly(méth)acrylate étant constitué d'au moins 90 % en poids d'acrylate de 2-éthyl-hexyle.

**10.** Procédé selon l'une quelconque des revendications précédentes, **caractérisé en ce que** le matériau support de l'étiquette est choisi parmi le papier, le polyéthylène, le polypropylène, la cellulose, le polyacétate et le polyester.

**11.** Procédé selon l'une quelconque des revendications précédentes, **caractérisé en ce que** le matériau support de l'étiquette n'est pas perforé et est de forme stable dans les conditions de lavage.

**12.** Procédé selon l'une quelconque des revendications précédentes, **caractérisé en ce que** le substrat est choisi parmi les emballages comprenant des surfaces en verre ou en plastique.

**13.** Procédé selon la revendication précédente, **caractérisé en ce que** le décollement a lieu avec un liquide de lavage à un pH de 9 à 11 et à une température de 60 à 90 °C.

**14.** Procédé selon l'une quelconque des deux revendications précédentes, **caractérisé en ce qu'**après le décollement de l'étiquette avec un liquide de lavage aqueux basique, l'adhésif de contact reste collé sur l'étiquette décollée à hauteur d'au moins 95 % en poids et/ou au plus 2 % d'étiquette non décollée reste sur le substrat.

**15.** Utilisation d'un adhésif de contact réticulable par rayonnement pour la fabrication d'étiquettes pouvant être collées après exposition à un rayonnement avec une dose de rayonnement de 6 à 18 $mJ/cm^2$ et pouvant être éliminées par lavage, l'adhésif de contact contenant au moins un polymère de poly(méth)acrylate réticulable par rayonnement, qui présente avant la réticulation une température de transition vitreuse inférieure ou égale à -50 °C, déterminée par calorimétrie différentielle à balayage selon ASTM 3418/82, et est constitué d'au moins 60 % en poids de (méth)acrylates d'alkyle en C1 à C10, et comprend au moins un photoinitiateur copolymérisé.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009003737 A
- WO 0146329 A
- EP 951004 A
- DE 10310889
- EP 377191 A
- EP 1213306 A


### In der Beschreibung aufgeführte Nicht-Patentliteratur


- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989